# DEMANDE DE BREVET EUROPEEN

(11) **EP 0 744 379 A1**
(43) Date de publication de la demande: **27.11.1996**
(21) Numéro de dépôt: 96401104.3
(22) Date de dépôt: 22.05.1996
(51) Int. Cl.: C01F 17/00, C07F 5/00, C03C 17/25

(54) **Composé à base d'yttrium ou d'holmium redispersible sous forme d'un sol**

(30) Priorité: 24.05.1995 FR 9506185
(71) Demandeur: RHONE-POULENC CHIMIE, 92408 Courbevoie Cédex (FR)
(72) Inventeur: Huguenin, Denis, 92600 Asnières-sur-Seine (FR); Macaudiere, Pierre, 92600 Asnières-sur-Seine (FR)
(74) Mandataire: Dubruc, Philippe

(57) **Abrégé**

L'invention concerne un composé sous forme solide, à base d'un hydroxyde d'yttrium ou d'holmium et d'un anion d'un acide monovalent présentant un pKa compris entre 2,5 et 5,0 redispersible dans l'eau à un taux d'au moins 80% et majoritairement sous forme d'une dispersion colloïdale. Ce composé est obtenu par un procédé caractérisé en ce qu'on sèche par atomisation une dispersion colloïdale à base d'un hydroxyde d'yttrium ou d'holmium et d'un anion d'un acide monovalent présentant un pka compris entre 2,5 et 5,0. Le composé redispersé dans l'eau donne une suspension colloïdale qui peut être utilisée pour le revêtement d'un substrat.

## Description

La présente invention concerne un composé à base d'yttrium ou d'holmium redispersible sous forme d'un sol.

Les sols ou dispersions colloïdales sont particulièrement avantageux pour la réalisation de revêtements minces sur des substrats dans le domaine de l'électronique ou de l'optique par exemple.

Ces revêtements permettent de conférer au substrat des propriétés spécifiques, par exemple d'antireflet, de transparence, de filtre, de protection. Ces propriétés sont obtenues par la présence de particules inorganiques dont la taille est généralement inférieure à 0,1µm.

Si les sols offrent de telles tailles de particules, ils ont, en outre, l'avantage d'être d'une utilisation beaucoup moins coûteuse et difficile que les techniques du type sol - gel ou évaporation sous vide, dont le coût et la complexité de mise en oeuvre limitent l'emploi aux secteurs de haute technologie et à des substrats ou systèmes de géométrie adaptée.

Cependant, l'utilisation des sols est limitée par une certaine instabilité dans le temps conduisant à une sédimentation. De plus, le coût du transport est toujours renchéri par le fait qu'il faut transporter, outre l'élément actif, la phase liquide dans laquelle celui-ci est en suspension.

Il est, de ce fait, particulièrement intéressant de pouvoir disposer de produits solides susceptibles de se redisperser pour donner une suspension colloïdale.

L'objet principal de l'invention est de fournir de tels produits.

Dans ce but, l'invention conceme un composé sous forme solide, à base d'un hydroxyde d'yttrium ou d'holmium et d'un anion d'un acide monovalent présentant un pKa compris entre 2,5 et 5,0, redispersible dans l'eau, majoritairement sous forme d'une dispersion colloïdale et à un taux d'au moins 80%.

L'invention concerne aussi un procédé de préparation d'un tel composé qui est caractérisé en ce qu'on sèche par atomisation une dispersion colloïdale à base d'un hydroxyde d'yttrium ou d'holmium, et d'un anion d'un acide monovalent présentant un pKa compris entre 2,5 et 5,0.

L'invention concerne, par ailleurs, une dispersion colloïdale obtenue par mise en suspension du composé précité.

L'invention concerne, enfin, l'utilisation d'une telle dispersion pour la réalisation d'un revêtement sur un substrat.

Le composé de l'invention est à base d'yttrium ou d'holmium sous la forme d'un hydroxyde, le terme hydroxyde pouvant couvrir ici aussi les produits sous la forme oxyhydroxyde.

L'hydroxyde est présent dans le composé avec un anion d'un acide.

Il s'agit d'un acide monovalent dont le pKa est compris entre 2,5 et 5,0.

De préférence, cet acide est soluble dans l'eau.

Comme exemple d'un tel acide, on peut citer l'acide acétique, l'acide formique, l'acide propionique et l'acide chloracétique.

Le composé de l'invention se présente sous la forme d'un solide généralement pulvérulent. Sa granulométrie (taille moyenne de particules mesurée par microscopie electronique à balayage MEB) peut être d'au plus 10µm. Elle peut être plus particulièrement d'au plus 5µm et d'au moins 1µm.

Le composé de l'invention présente, en outre, deux caractéristiques spécifiques :

D'une part, il est redispersible dans l'eau. D'autre part, il se redisperse majoritairement sous forme d'une dispersion colloïdale ou sol.

La dispersibilité est le rapport (P₁ - P₂) / P₁ exprimé en pourcentage, P₁ étant la masse initiale de produit mis en suspension dans l'eau, P₂ la masse de précipité résiduel sec obtenu après centrifugation de la suspension, séparation des eaux-mères et du précipité et séchage de ce dernier. L'eau de suspension est de préférence à pH neutre ou éventuellement légèrement acide (pH = 4).

Cette dispersibilité est mesurée en mettant 1 g de produit dans une fiole jaugée de 50 ml, on complète en eau à 50 ml et on agite pendant 15 minutes. La suspension obtenue est centrifugée à 4500 t/mn pendant 10 mn. Les eaux-mères sont ensuite séparées du précipité qui est séché à 120°C pendant une nuit.

La dispersibilité du composé de l'invention est ainsi d'au moins 80%. Elle peut être d'au moins 90% et être située entre 95 et 100%.

Le composé de l'invention se redisperse, par ailleurs, majoritairement sous forme d'une dispersion colloïdale. Ceci signifie, en d'autres termes, que la majeure partie du composé une fois redispersé dans l'eau se présente sous forme d'un sol et non pas d'une solution.

Cette propriété se mesure en soumettant le milieu aqueux obtenu en redispersant le composé dans l'eau à une ultracentrifugation et en mesurant après cette ultracentrifugation la masse de précipité obtenue. Cette masse correspond à la partie de l'espèce se trouvant dans la dispersion sous forme colloïdale, l'autre partie sous forme de solution se trouve dans les eaux-mères. La masse de précipité correspond à au moins 60%, plus particulièrement au moins 75% de la masse de composé introduit initialement dans la dispersion.

Dans le cas présent, on disperse le composé dans l'eau et on le centrifuge à 4500 t/mn pendant 10 minutes. Le surnageant aqueux obtenu est ensuite soumis à une centrifugation à 50000 t/mn pendant 12 heures.

Selon un mode de réalisation de l'invention, les composés de l'invention peuvent répondre à la formule suivante :

TR(A)ₓ(OH)₃₋ₓ

dans laquelle :
TR désigne l'yttrium ou l'holmium
A représente l'anion de l'acide monovalent précité
x est inférieur à 2,5 et supérieur à 1.

x peut être plus particulièrement compris entre 1,1 et 2,2 et encore plus particulièrement entre 1,2 et 1,8.

Le procédé de préparation du composé de l'invention va maintenant être décrit.

Ce procédé consiste essentiellement à partir d'une dispersion colloïdale à base d'un hydroxyde d'yttrium ou d'holmium et d'un anion d'un acide monovalent présentant un pKa compris entre 2,5 et 5,0 et à sécher par atomisation cette dispersion.

La dispersion colloïdale de départ peut être obtenue en faisant réagir un oxyde d'yttrium ou d'holmium avec l'acide du type décrit précédemment et en chauffant le milieu réactionnel obtenu.

On pourra se reférer à la demande de brevet français FR-A-2620437 au nom de la Demanderesse dont l'enseignement est incorporé ici à la présente demande qui décrit la préparation d'une telle dispersion.

On peut noter que selon un mode de réalisation préféré de l'invention, l'oxyde de départ mis en oeuvre pour la préparation de la dispersion est un oxyde de pureté d'au moins 99%, et plus particulièrement d'au moins 99,99%.

La quantité d'acide utilisée pour cette préparation spécifique de la dispersion de départ est en défaut par rapport à la stoechiométrie, le rapport molaire entre l'acide mis en oeuvre et l'oxyde de la terre rare, exprimé en cation métallique, est inférieur à 2,5 et supérieur à 1.

La température de chauffage est située généralement entre 50°C et la température de reflux du milieu réactionnel. D'une manière préférentielle, ce chauffage est effectué entre 70 et 100°C.

Enfin, la durée du chauffage est variable et est d'autant plus courte que la température est élevée. Une fois la température réactionnelle atteinte, on la maintient pendant 1 à 4 heures.

Le procédé de l'invention est caractérisé par le fait que la dispersion collïdale est séchée par atomisation.

On entend par séchage par atomisation un séchage par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions Gerge Godwin - London).

Dans le cas d'une atomisation utilisant des appareils du type décrit ci-dessus, on travaillera généralement avec une température de sortie du solide comprise entre 90 et 130°C.

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est comprise entre 400 et 900°C et plus particulièrement entre 600 et 800°C, la température du solide séché entre 110 et 150°C.

En ce qui conceme le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre inteme coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact. La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

A l'issue du séchage par atomisation, on obtient le composé sous forme solide de l'invention.

L'invention concerne aussi la dispersion colloïdale obtenue par remise en suspension dans l'eau du composé dispersible de l'invention.

La dispersion ainsi obtenue est constituée de colloides dont le diamètre moyen hydrodynamique mesuré par diffusion quasi-élastique de la lumière (DQEL) est compris entre 5 et 200 nm.

Il est à noter que cette taille des colloides peut varier au cours du temps. Ainsi, les dispersions fraichement préparées présenteront un diamètre moyen de colloides compris entre 5 et 60 nm, plus particulièrement entre 20 et 40 nm. Pour les dispersions plus anciennes, par exemple de deux jours ou plus, ce diamètre sera compris entre 40 et 200 nm, plus particulièrement entre 80 et 160 nm.

La dispersion peut présenter une concentration en oxyde d'yttrium ou d'holmium pouvant atteindre 1 mole/litre.

Son pH est voisin de la neutralité et se situe plus particulièrement entre 6,0 et 7,5.

L'invention concerne enfin l'utilisation de la dispersion obtenue à partir du composé dispersible décrit plus haut, pour la réalisation d'un revêtement sur un substrat.

Cette utilisation se fait d'une manière connue en soi.

Par exemple, les substrats peuvent être ou non pré-oxydés.

Le dépôt de la dispersion sur le substrat peut être réalisé directement à partir de la dispersion de l'invention en utilisant des techniques classiques de revêtement du type trempage ou pulvérisation par exemple.

Après réalisation du dépôt, le substrat présente une couche adhérente en surface, ce qui le rend manipulable.

Le substrat est ensuite traité thermiquement.

Le traitement thermique se fait généralement à une température d'au plus 600°C. Cette température peut être plus basse, par exemple d'au plus 400°C, en fonction de la nature des substrats.

On forme ainsi sur le substrat une couche mince d'oxyde de terre rare d'une épaisseur généralement inférieure à 0,1µm.

Des exemples vont maintenant être donnés.

### EXEMPLE 1

### Synthèse du sol

La synthèse du sol se fait comme décrit dans FR-A-2620437. Plus précisément, on introduit dans un réacteur thermostaté un litre d'acide acétique 2N que l'on porte à 70°C.

On ajoute, ensuite, 180 g d'oxyde d'yttrium de haute pureté (4N).

Après 30 minutes de réaction, on observe un saut de pH qui passe de 3 à 6 et on laisse alors mûrir la solution pendant encore 3 heures 30 minutes. On recueille la suspension que l'on centrifuge à 3500 t/mn et l'on récupère le surnageant. Les caractéristiques du sol sont les suivantes :
- taille des particules : 6 nm
- pH : 6,8
- concentration : 160 g/l en Y₂O₃
- formule brute : Y(OH)_{1,7}Ac_{1,3}

### Atomisation

200 ml de sol sont séchés par atomisation sur un Büchi de laboratoire, avec une température d'entrée de 245°C et une température de sortie de 119°C.

L'analyse thermique de la poudre montre un départ d'acide acétique entre 25 et 150°C, puis d'H₂O entre 150 et 245°C, puis une décomposition d'acétate en deux temps (245°C - 320°C, puis 320°C - 397°C). A partir de 600°C, le produit obtenu est de l'oxyde d'yttrium.

### Redispersion

30 g de poudre sont ajoutés sous agitation dans 50 ml d'eau. Le milieu obtenu est parfaitement limpide. Une centrifugation à 4500t/min pendant 10minutes donne un culot de centrifugation de poids inférieur à 1% du poids de poudre de départ.
Le sol obtenu présente les caractéristiques suivantes :
- taille des particules : 15 à 20 nm, 40 à 100 nm après 2 jours
- concentration : 166 g/l.

Après ultra-centrifugation 12 heures à 50000 t/min., le taux de colloïde est supérieur à 77%.

### EXEMPLE 2 COMPARATIF

Un sol de départ est synthétisé comme dans l'exemple 1. Au lieu d'être séché par atomisation, il est séché à l'étuve ou par lyophilisation. Les deux poudres obtenues sont redispersées comme dans l'exemple 1 à une teneur de 180 g/l d'Y₂O₃. Le liquide obtenu est centrifugé à 4500 t/min. pendant 10 minutes.

Après centrifugation, on observe dans les deux cas un dépôt important au fond du tube. Le surnageant est observé par DQEL. On ne note que très peu de diffusion, ce qui indique que l'on n'est pas en présence d'un sol mais d'une solution.

## Revendications

1. Composé sous forme solide, à base d'un hydroxyde d'yttrium ou d'holmium et d'un anion d'un acide monovalent présentant un pKa compris entre 2,5 et 5,0 redispersible dans l'eau à un taux d'au moins 80% et majoritairement sous forme d'une dispersion colloïdale.

2. Composé selon la revendication 1, caractérisé en ce qu'il est redispersible dans l'eau à au moins 60% et plus particulièrement à au moins 75%, sous forme d'une dispersion colloïdale.

3. Composé selon la revendication 1 ou 2, caractérisé en ce qu'il présente une granulométrie d'au plus 10µm.

4. Composé selon l'une des revendications 1 à 3, caractérisé en ce qu'il répond à la formule suivante :
TR(A)ₓ(OH)₃₋ₓ
dans laquelle :
TR désigne l'yttrium ou l'holmium,
A représente l'anion de l'acide monovalent précité,
x est inférieur à 2,5 et supérieur à 1.

5. Composé selon l'une des revendications 1 à 4, caractérisé en ce que l'acide précité est l'acide acétique.

6. Procédé de préparation d'un composé selon rune des revendications 1 à 5, caractérisé en ce qu'on sèche par atomisation une dispersion colloïdale à base d'un hydroxyde d'yttrium ou d'holmium et d'un anion d'un acide monovalent présentant un pKa compris entre 2,5 et 5,0.

7. Procédé selon la revendication 6, caractérisé en ce qu'on prépare la dispersion colloïdale précitée en faisant réagir un oxyde d'yttrium ou d'holmium avec l'acide précité et en chauffant le milieu réactionnel obtenu.

8. Dispersion colloïdale, caractérisée en ce qu'elle est obtenue par une remise en suspension d'un composé selon l'une des revendications 1 à 5.

9. Dispersion colloïdale selon la revendication 8, caractérisée en ce que le diamètre moyen hydrodynamique des colloides se situe entre 5 et 200 nm.

10. Utilisation d'une dispersion selon l'une des revendications 8 ou 9 pour la réalisation d'un revêtement sur un substrat.
